# EUROPEAN PATENT SPECIFICATION

(11) **EP 3 546 631 B1**
(45) Date of publication and mention of the grant of the patent: **23.06.2021**
(21) Application number: 19166016.6
(22) Date of filing: 28.03.2019
(51) Int. Cl.: D04B 15/80, D04B 15/56

(54) **FLAT KNITTING MACHINE**
FLACHSTRICKVERFAHREN
MACHINE À TRICOTER RECTILIGNE

(30) Priority: 30.03.2018 JP 2018069639
(43) Date of publication of application: 02.10.2019
(73) Proprietor: Shima Seiki Mfg., Ltd., Wakayama-shi, Wakayama 641-0003 (JP)
(72) Inventor: UENOYAMA, Takayoshi, Wakayama 641-0003 (JP)
(74) Representative: Emde, Eric

(56) References cited:
- CN-A- 101 139 777
- DE-A1- 4 308 251

## Description

### TECHNICAL FIELD

The present invention relates to a flat knitting machine.

### BACKGROUND ART

A flat knitting machine includes a needle bed in which multiple knitting needles are arranged side-by-side, and is provided with multiple moving bodies that are involved in the knitting of a knitted fabric, and these moving bodies are attached to a rail and travel along the rail. One example of such moving bodies is yarn feeders (hereinafter, sometimes called "YF") that feed yarn to the knitting needles in the needle bed.

Patent Document 1 discloses a configuration in which a YF is driven by a linear motor, or a drive motor or the like is attached to a YF, such that the YF is self-propelled. The drive motor provided for the YF and the control apparatus for control thereof are supplied with electrical power through contact power supply that is performed via a contact strip provided on the rail.

Patent Document 2 discloses a moving body (reference sign 300 in Patent Document 2) that travels on a rail to which the YF is attached, and that moves the YF by inserting a changeover pin into the YF. In Patent Document 2, the insertion and removal of the changeover pin is performed using electrical power that is supplied to the moving body through contact between a conductive sheet provided on the rail and a carbon brush provided on the moving body.

### PRIOR ART DOCUMENT

### PATENT DOCUMENTS

Patent Document 1: German Patent Application Publication No. 4308251
Patent Document 2: Chinese Patent Application Publication No. 101139777

### SUMMARY OF THE INVENTION

### PROBLEMS TO BE SOLVED BY THE INVENTION

As disclosed in Patent Document 1, there has been a proposal to provide a YF with a device that operates electrically. In this case, information indicating a device operation timing and the like needs to be transmitted to the YF. Wireless transmission can be performed using Wi-Fi (registered trademark) or the like, but it is troublesome to create specifications that comply with radio laws in various countries. On the other hand, it is possible to perform optical wireless communication, which can be used regardless of radio laws, but unlike radio waves, information cannot be transmitted around obstacles, and therefore it is difficult to transmit information to each of the plurality of YFs provided in a flat knitting machine. YFs frequently change position when knitting a knitted fabric, and therefore if a YF or the like becomes located between an optical wireless transmitter and a target YF, information cannot be transmitted to the target YF.

The present invention was achieved in light of the foregoing circumstances, and an object thereof is to provide a flat knitting machine in which information can be reliably transmitted to a target yarn feeder using optical wireless communication.

### MEANS FOR SOLVING THE PROBLEMS

A flat knitting machine of the present invention includes a needle bed having a plurality of knitting needles, a rail extending along a length direction of the needle bed, a plurality of yarn feeders provided on the rail, and a computer that controls the flat knitting machine, the flat knitting machine including:
a main body side transmitter that is provided in a vicinity of one end of the rail and transmits knitting-related information from the computer in a direction along the rail through optical wireless transmission;
a main body side receiver that is provided in a vicinity of an other end of the rail, receives the information transmitted through optical wireless transmission, and sends the information to the computer; and
an optical wireless transceiver that is provided in each of the yarn feeders, receives the information transmitted from the main body side transmitter, and relays the information to the main body side receiver.

In an aspect of the flat knitting machine of the present invention, the optical wireless transceivers each include
a YF side receiver that is provided on the yarn feeder at a position on one end side of the rail and has a light reception axis that is directed toward the one end side, and
a YF side transmitter that is provided on the yarn feeder at a position on an other end side of the rail and has a light projection axis that is directed toward the other end side.

In an aspect of the flat knitting machine of the present invention, the flat knitting machine further includes: a first feeder group made up of a plurality of the yarn feeders that travel on a same track; and
a second feeder group made up of a plurality of the yarn feeders that travel on another track that is adjacent to the track on which the first feeder group travels,
wherein a communication direction with respect to the first feeder group and a communication direction with respect to the second feeder group are opposite directions.

In an aspect of the flat knitting machine of the present invention, the yarn feeders each include at least one electrical device that acquires knitting-related information in addition to the optical wireless transceiver, and
the information acquired by the at least one electrical device is transmitted to the computer through optical wireless communication.

### EFFECTS OF THE INVENTION

According to the above configuration of the flat knitting machine of the present invention, knitting-related first information is transmitted from the main body side transmitter. Each YF relays, to the main body side receiver, knitting-related second information which includes further information successively added by each of the YFs to the first information. Alternatively, each YF may relay, to the main body side receiver, the first information as it is. Therefore, even if a plurality of YFs are provided on one track, information can be reliably transmitted to each of the YFs by performing optical wireless communication in which the information is successively relayed by the optical wireless transceivers provided on the YFs. Here, the track is a YF traveling route formed on the rail. If a plurality of YFs are provided on the same track, the YFs on that track travel back and forth on the same straight line. The YF located on one end side of the track cannot pass a YF on the other end side of that YF in order to travel toward the other end side.

The YF side receiver is provided at a position on the one end side of the rail, and the YF side transmitter is provided at a position on the other end side of the rail, and therefore the YFs can easily receive information from the one end side and easily transmit information to the other end side, thus making it possible for information to be easily transmitted from the one end side of the rail to the other end side. Also, the YFs arranged on the same track can have the same configuration. Here, if, in contrast to the above configuration, the YF side receiver is arranged on the other end side of each YF, and the YF side transmitter is arranged on the one end side of each YF, YFs that are adjacent on the track need to have different configurations. In the case of optical wireless communication in which transmission is performed from the one end side to the other end side, if the YF side receiver on the other end side and the YF side transmitter on the one end side are arranged at the same height position in each YF, there is a problem that the YF side transmitter acts as a wall and makes reception by the YF side receiver difficult, and there is a problem that a signal from the YF side transmitter is received by the YF side receiver of the same YF. For this reason, the YF side receiver and the YF side transmitter in each YF need to be arranged at different heights. In this case, the vertical positional relationship between the YF side transmitter and the YF side receiver of one of two adjacent YFs needs to be made opposite to that of the YF side transmitter and the YF side receiver of the other YF.

One feeder group and another feeder group that are adjacent in the rail parallel arrangement direction are given opposite communication directions in optical wireless communication, thus making it possible to suppress the case where information is transmitted to the wrong YF.

Information acquired by the electrical devices provided on the YFs is fed back to the computer, thus making it possible to improve knitting conditions and improve knitting efficiency.

### BRIEF DESCRIPTION OF THE DRAWINGS

FIG. 1 isa schematic front view of a flat knitting machine according to an embodiment.
FIG. 2 is a schematic diagram of a yarn feeder viewed from one side of a rail.
FIG. 3 is a schematic diagram of the yarn feeder viewed from the side opposite to that in FIG. 2.
FIG. 4 is a schematic illustrative diagram of an optical wireless system that relays information to an optical wireless transceiver provided on the yarn feeder.
FIG. 5 is an illustrative diagram that illustrates an example of communication directions on parallel rails.

### DESCRIPTION OF THE EMBODIMENTS

### First Embodiment

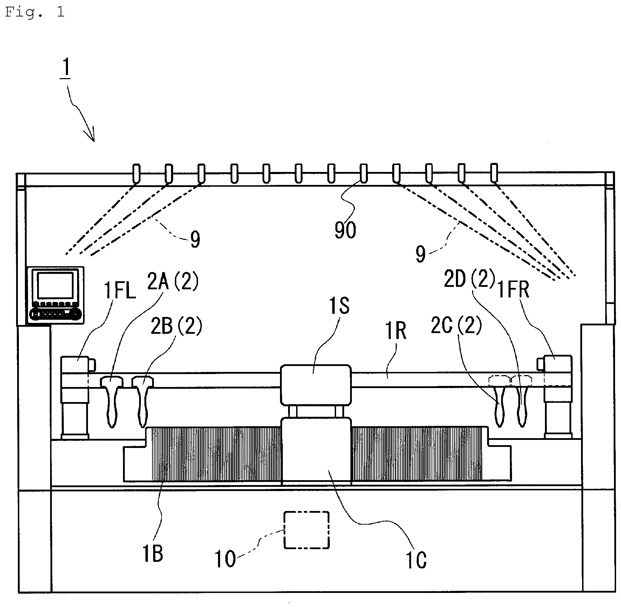

A flat knitting machine 1 according to an embodiment of the present invention will be described below with reference to FIGS. 1 to 5.

As shown in FIG. 1, the flat knitting machine 1 includes a pair of needle beds 1B that are arranged facing each other in the depth direction with respect to the paper plane, and yarn feeders (hereinafter, called "YF") 2A to 2D that feed knitting yarn 9 to a needle bed gap formed between the two needle beds 1B. Multiple knitting needles are aligned in each needle bed 1B, and these knitting needles are driven by a cam system (not shown) provided in a carriage 1C that moves back and forth over the needle bed 1B. Also, the YFs 2A to 2D travel along a rail 1R. The rail 1R spans between a pair of frames 1FR and 1FL, which are immovable members that are provided upright on respective end sides of the flat knitting machine 1 and are integrated with the flat knitting machine 1. Multiple rails 1R are provided parallel with each other in the depth direction with respect to the paper plane, and the rails 1R each extend parallel with the needle beds 1B at positions above the needle beds 1B. Hereinafter, when giving descriptions that are common to all of the YFs 2A to 2D, the term "YFs 2" will be used instead of distinguishing between the YFs 2A to 2D.

In this embodiment, multiple YFs 2 are attached to each rail 1R. The YFs 2A and 2B are attached to the surface of the rail 1R that is on the front side with respect to the paper plane, and the YFs 2C and 2D are attached to the surface of the rail 1R that is on the back side with respect to the paper plane. These YFs 2 travel along the rail 1R by being selected and moved by a selector 1S that hangs over the rail 1R. The YFs 2 are selected by engagement with a retractable changeover pin that is provided in the selector 1S. The selector 1S is coupled to the carriage 1C, and moves integrally with the carriage 1C. When the selector 1S selects and moves the YFs 2 to be used in knitting, knitting is performed using the knitting yarn 9 that is supplied from the YFs 2. Note that the configuration for moving the YFs 2 is not limited to the configuration in this embodiment, and can be a configuration in which the YFs 2 are self-propelled. The operations of the carriage 1C and the selector 1S are controlled by a computer 10 that is provided in the flat knitting machine 1.

The YFs 2 are each supplied with knitting yarn 9 from a knitting yarn supply source (not shown) such as a cone that is arranged above the flat knitting machine 1 for example, and the knitting yarn 9 is fed via a tension equipment 90 and furthermore via a side tension device (not shown) provided on a lateral side of the flat knitting machine 1. In other words, the YFs 2 in this embodiment are configured to receive a supply of the knitting yarn 9 from its lateral side. In contrast to this example, a configuration is possible in which the YFs 2 receive a supply of the knitting yarn 9 from above.

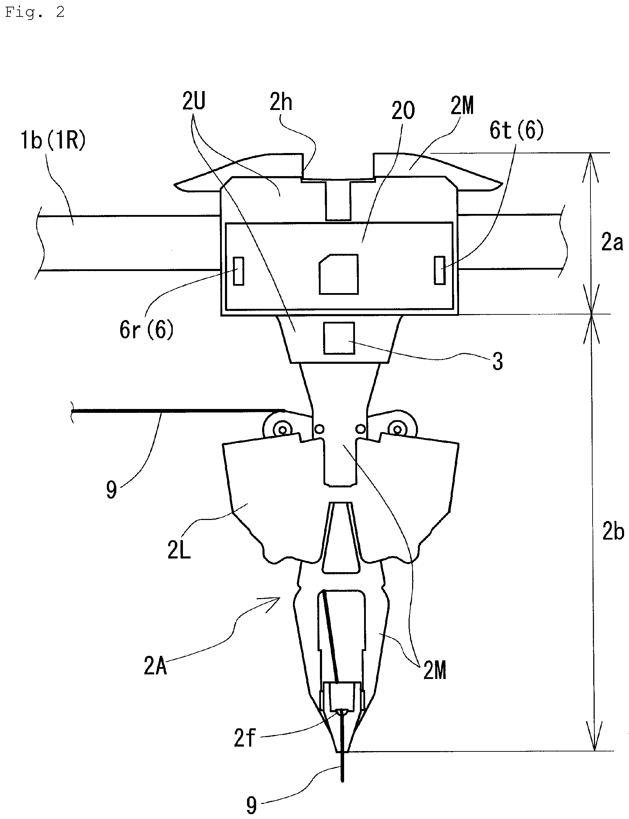

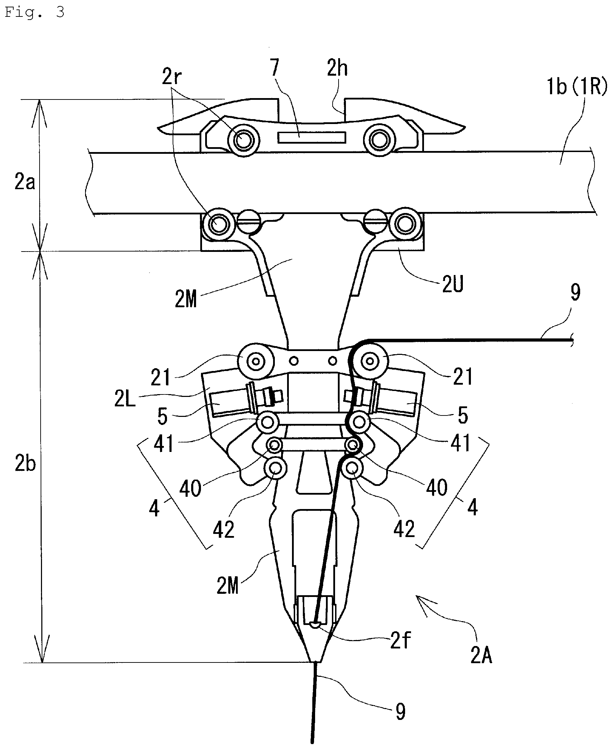

The flat knitting machine 1 of this embodiment is provided with an optical wireless system that enables the exchange of information between the computer 10 and the YFs 2. In order to exchange information, the YFs 2 need to be provided with an optical wireless transceiver and a power supply portion for supplying electrical power. First, the schematic configuration of the YFs 2 of this embodiment will be described with reference to FIGS. 2 and 3, then a control circuit and the power supply portion will be described briefly, and lastly, the optical wireless system and the information exchanged in this system will be described.

### Yarn feeder

FIG. 2 is a diagram showing the YF 2A attached to the rail 1R, as viewed from the front side with respect to the paper plane in FIG. 1, and FIG. 3 is a diagram showing the YF 2A as viewed from the back side with respect to the paper plane in FIG. 1. FIGS. 2 and 3 show only one ridge 1b that is provided on a side surface of the rail 1R, and the YF 2A slides along this ridge 1b. For the sake of convenience, the side shown in FIG. 2 will be called the front side of the YF 2A, and the side shown in FIG. 3 will be called the back side of the YF 2A. The YF 2A of this embodiment shown in FIGS. 2 and 3 includes a main body portion 2M, a lower mounting portion 2L, and an upper mounting portion 2U. Of course, the configuration of the YF 2A shown in FIGS. 2 and 3 is merely one example, and there is no limitation to this configuration. Note that the knitting yarn 9 is emphasized in FIGS. 2 and 3 in order to aid understanding of the path of the knitting yarn 9.

As shown in FIG. 3, the main body portion 2M is an elongated member that extends downward from the rail 1R, and includes traveling rollers 2r that sandwich the ridge 1b of the rail 1R from above and below. More specifically, the main body portion 2M is divided into a carrier portion 2a on which the traveling rollers 2r are provided, and a suspended portion 2b that extends so as to hang downward from the carrier portion 2a. In order to ensure strength, the main body portion 2M is preferably made of a metal. A pin groove 2h for receiving the changeover pin of the selector 1S shown in FIG. 1 is provided in the upper edge of the carrier portion 2a. Also, a yarn feeding opening 2f for guiding the knitting yarn 9 to the needle bed gap is provided at the lower end of the suspended portion 2b, and a roller-shaped introduction guide 21 for guiding the knitting yarn 9 toward the yarn feeding opening 2f is provided somewhat upward of the intermediate portion. The introduction guide 21 of this embodiment is configured by a roller that has a rotation shaft that extends in the thickness direction of the main body portion 2M. The introduction guide 21 is provided on a small piece that extends in the extending direction of the rail 1R and is fixed to the suspended portion 2b, and more specifically in a portion of the small piece that projects out from the suspended portion 2b. Note that the introduction guide 21 is not limited to being a roller, and may be a tubular member through which the knitting yarn 9 can pass, for example.

The lower mounting portion 2L is attached at a position that is below the introduction guide 21. Although the lower mounting portion 2L appears to be a plate-shaped member in the drawings, it is actually constituted by combining a plate piece and a framework member or the like. This lower mounting portion 2L is for the mounting of electrical devices such as a tension sensor 4 and a tension adjusting apparatus 5 that are shown in FIG. 3, and is made of an insulating material. A portion of the lower mounting portion 2L projects laterally from the main body portion 2M in a front view of the YF 2A from a direction orthogonal to the extending direction of the rail 1R, and as shown in FIG. 3, the tension sensor 4 and the tension adjusting apparatus 5 are provided on the back side of this projecting portion.

The upper mounting portion 2U is a plate-shaped member that is provided on the front side (side shown in FIG. 2) of the carrier portion 2a. The upper mounting portion 2U is for the mounting of a later-described control circuit 20 and the like, and is made of an insulating material. The front side of the carrier portion 2a may be formed with a box-like shape, and the upper mounting portion 2U may be stored inside the carrier portion 2a. In this case, if the carrier portion 2a is provided with a lid, it is possible to protect the control circuit 20 from dust and oil.

### Power supply portion

A power supply portion 3 shown in FIG. 2 is configured to supply electrical power to an electrical device that is provided on the YF 2A, and in this embodiment, the power supply portion 3 is provided on the upper mounting portion 2U. The power supply portion 3 may be an active power supply that supplies electrical power from its own power supply, such as a battery, or may be a passive power supply that receives electrical power from outside of the YF 2A and supplies that electrical power to the electrical device. Examples of methods for supplying electrical power to the passive power supply include a contact type of power supply such as that described in Patent Document 1 or 2, and a contactless power supply method that utilizes electromagnetic induction or the like.

### Control circuit

The control circuit 20 is provided on the front side of the upper mounting portion 2U, and is electrically connected to the power supply portion 3. In this embodiment, an optical wireless transceiver 6 is provided on the YF 2A, and the control circuit 20 of this embodiment has a communication control portion for the optical wireless transceiver 6. Also, the YF 2A of this embodiment may include a tension control portion for controlling the tension adjusting apparatus 5 based on information from the tension sensor 4 as will be described later, and in this case, the tension control portion can be provided in the control circuit 20. These control portions provided on the YF 2A are controlled in coordination with each other by an overall control portion provided in the computer 10 of the flat knitting machine 1.

### Optical wireless system

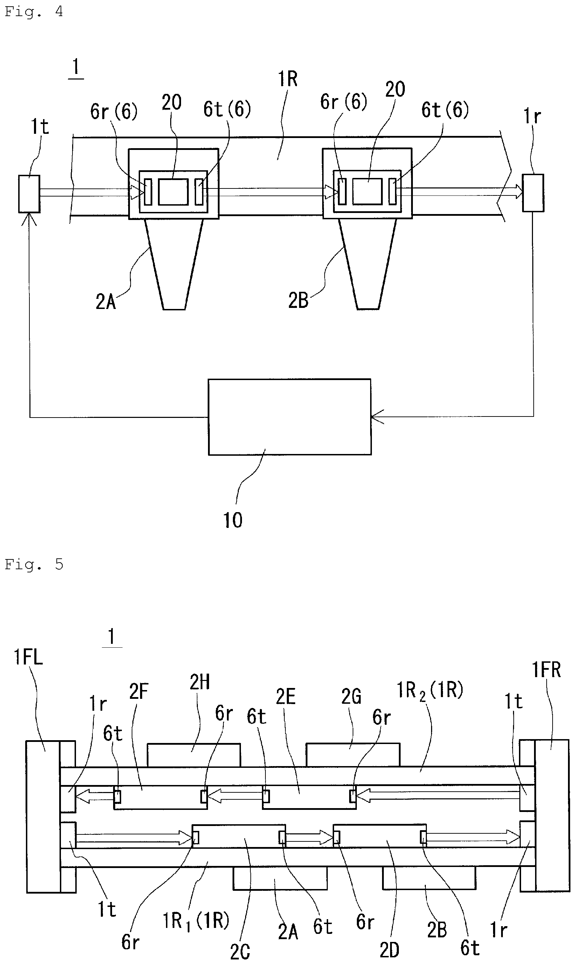

The following describes an example of an optical wireless system in which information is exchanged between the computer 10 and the YFs 2A and 2B of the flat knitting machine 1, with reference to FIG. 4. The optical wireless communication method of this embodiment employs infrared light, but may employ visible light.

In the example shown in FIG. 4, the two YFs 2A and 2B attached to one rail 1R. The optical wireless system of this embodiment includes a main body side transmitter 1t and a main body side receiver 1r that are connected to the computer 10 of the flat knitting machine 1, and the optical wireless transceivers 6 that are provided on the YFs 2A and 2B. The optical wireless transceivers 6 each include an optical wireless YF side receiver 6r and YF side transmitter 6t, and a communication control portion that controls them. The members 6r and 6t of this embodiment are implemented in the control circuit 20, and an IC chip of the control circuit 20 is employed as the communication control portion.

The main body side transmitter 1t is an apparatus that transmits knitting-related information from the computer 10 to the YFs 2A and 2B using optical wireless communication, and is arranged on a non-moving member on one end side of the rail 1R, such as a frame 1FL in FIG. 1. The light projection axis of the main body side transmitter 1t is directly faced to the YF side receiver 6r of the YF 2A that is located closer to the main body side transmitter 1t. Also, the main body side receiver 1r is an apparatus that receives information transmitted by the YF 2B using optical wireless communication, and is arranged on a non-moving member on the other end side of the rail 1R, such as a frame 1FR in FIG. 1. The light reception axis of the main body side receiver 1r is directly faced to the YF side transmitter 6t of the YF 2B that is located closer to the main body side receiver 1r.

The YF side receiver 6r of the YF 2A (2B) is provided at a position in the YF 2A (2B) that is on the one end side of the rail 1R, and the YF side transmitter 6t is provided at a position in the YF 2A (2B) that is on the other end side of the rail 1R. The light axis of the YF side transmitter 6t of the YF 2A is directly faced to the YF side receiver 6r of the YF 2B. According to this configuration, information transmitted from the one end side of the rail 1R can be easily received, and information can be easily transmitted to the other end side of the rail 1R.

According to the optical wireless system having the above-described configuration, information transmitted through optical wireless communication from the main body side transmitter 1t to the main body side receiver 1r is relayed through the optical wireless transceivers 6 provided on the YFs 2A and 2B as shown by the outlined arrows. Information (first information) including individual instructions for the respective YFs 2 is transmitted from the main body side transmitter 1t. This information is first received by the control circuit 20 of the YF 2A, which extracts the instruction that is for itself, and then executes that instruction. The control circuit 20 of the YF 2A then adds information acquired by itself (e.g., later-described information regarding the tension of the knitting yarn, and position information) to the information received from the main body side transmitter 1t, and transmits the resulting information (second information) to the subsequent YF 2B. Similarly to the YF 2A, the YF 2B also extracts the instruction that is for itself, executes the extracted instruction, and then transmits information (including information acquired by the YF 2B) to the main body side receiver 1r. The information acquired by the YFs 2A and 2B is fed back to the computer 10 via the main body side receiver 1r and used for optimization of knitting conditions for example. The above-described usage of information and transmission procedure are the same even when there are three or more YFs. Here, the transmission of information acquired by the YFs 2A and 2B is not essential. In this case, examples of the information fed back to the computer 10 include information indicating that an instruction was received or indicating the result of executing an instruction. In addition, while the YFs 2A and 2B receive the individual instructions included in the first information, they may transmit the first information as it is without adding new information to the first information.

Next, a preferable example of communication directions in the case where the rails 1R are parallel will be described with reference to FIG. 5. In FIG. 5, a first rail 1R₁ (1R) and a second rail 1R₂ (1R) adjacent thereto are seen from above. The rails 1R₁ and 1R₂ are each provided with two YFs among the YFs 2A to 2H on each of two tracks respectively on one surface side and the other surface side in the parallel arrangement direction.

As shown in FIG. 5, on the first rail 1R₁, communication with respect to the YFs 2C and 2D (first feeder group) provided on the track on the surface that faces the second rail 1R₂ is performed in the rightward direction with respect to the paper plane. In this case, letting the side on which the frame 1FL is arranged be the one end side of the first rail 1R₁, and letting the side on which the frame 1FR is arranged be the other end side of the first rail 1R₁, the main body side transmitter 1t is provided on the frame 1FL, and the main body side receiver 1r is provided on the frame 1FR. On the second rail 1R₂, communication with respect to the YFs 2E and 2F (second feeder group) provided on the track on the surface that faces the first rail 1R₁ is performed in the leftward direction with respect to the paper plane, which is opposite to the communication direction with respect to the YFs 2C and 2D. In this case, letting the side on which the frame 1FR is arranged be the one end side of the second rail 1R₂, and letting the side on which the frame 1FL is arranged be the other end side of the second rail 1R₂, the main body side transmitter 1t is provided on the frame 1FR, and the main body side receiver 1r is provided on the frame 1FL.

In this embodiment, the communication direction with respect to the first feeder group made up of the YFs 2C and 2D and the communication direction with respect to the second feeder group made up of the YFs 2E and 2F are opposite directions. For example, communication information from the main body side transmitter 1t on the first rail 1R₁ is not received by the YFs 2E and 2F on the second rail 1R₂, and communication signals from the YFs 2C and 2D are also not received by the YFs 2E and 2F. This is because the YF side receivers 6r of the YFs 2C and 2D do not face the frame 1FL. The same can be said for communication information on the second rail 1R₂ as well, and by setting the communication directions opposite to each other for the adjacent feeder groups in this way, it is possible to suppress the erroneous transmission of information.

Here, there are no particular limitations on the communication direction for the YFs 2A and 2B on the first rail 1R₁ and the communication direction for the YFs 2G and 2H on the second rail 1R₂. This is because in this embodiment, in the case of the feeder group made up of the YFs 2A and 2B (2G and 2H), the first rail 1R₁ (second rail 1R₂) functions as a wall such that communication signals do not reach the other feed group. Here, in the case where the rail 1R is narrow and does not function as a wall, it is preferable that the communication direction for the feeder group on one track of one rail 1R and the communication direction for the feeder group on the other track of the same rail are set opposite to each other. For example, the communication direction for the YFs 2A and 2B on the first rail 1R₁ and the communication direction for the YFs 2C and 2D are set opposite to each other. Also, erroneous transmission may be suppressed by shifting the timing of communication for each track.

### Information exchanged in optical wireless system

Examples of information exchanged in the optical wireless system include numbering information (e.g., ID numbers) of the YFs 2. For example, consider the case where the YFs 2C, 2D, 2E, and 2F in FIG. 5 are respectively registered as the first, second, third, and fourth YFs in the computer 10. First, the computer 10 transmits, from the main body side transmitter 1t of the first rail 1R₁, numbering information including an instruction for recognizing one's number in the order of signal reception. The YF 2C receives the numbering information first, recognizes itself as the first YF, and transmits numbering information including information related to itself to the YF 2D. The YF 2D recognizes itself as the second YF based on the received numbering information, and then transmits numbering information to the main body side receiver 1r. The computer 10 recognizes that the numbering of the first YF and the second YF has ended, and transmits numbering information from the main body side transmitter 1t of the second rail 1R₂. As a result, the computer 10 recognizes that the YF 2E is the third YF, and that the YF 2F is the fourth YF. Although all of the YFs provided in the flat knitting machine 1 are numbered in order in the above configuration, one optical wireless system exists for each of the rails 1R₁ and 1R₂ in this embodiment, and therefore the YFs may be recognized separately for each rail.

As described above, in the optical wireless system of this embodiment, information is transmitted to the YFs 2 in a determined order, and therefore the YFs 2 can be numbered by merely transmitting numbering information. In contrast, in the case of wireless communication performed using radio waves, information is transmitted to all of the YFs 2 at the same time, and therefore the YFs 2 need to be numbered before being attached to the rails 1R₁ and 1R₂. In this case, if any of the YFs 2A to 2H are attached at the wrong position, there is a possibility that knitting cannot be performed. For this reason, the operation of attaching the YFs 2 requires a corresponding amount of precaution, and there is a risk of a decrease in the productivity of the flat knitting machine 1.

One example of information transmitted from the YF 2A to the computer 10 in the optical wireless system is knitting-related information acquired by an electrical device provided on the YF 2A. For example, the position measuring apparatus 7 shown in FIG. 3 is one example of the electrical device. The position measuring apparatus 7 measures the position of the YF 2A on the rail 1R. Examples of the position measuring apparatus 7 include an optical device that optically reads a scale provided on the rail 1R, and a Hall element that detects a linear scale provided along the rail 1R. The position of the YF 2A is transmitted to the computer 10 of the flat knitting machine 1 via the optical wireless transceiver 6. The computer 10 realizes optimal movement of the YF 2A based on the position information from the YF 2A. For example, if the YF 2A is provided with a brake mechanism, the stopping position of the YF 2A can be highly accurately controlled based on the position information. Also, the position information from the YF 2A can be used to perform control for operating some sort of electrical device when the YF 2A reaches a predetermined position.

### Other configurations

The YF 2A of this embodiment includes the power supply portion 3, and thus can also be provided with an electrical device other than the position measuring apparatus 7. For example, as shown in FIG. 3, the YF 2A can be provided with the tension sensor 4 and the tension adjusting apparatus 5.

The tension sensor 4 acquires aphysical amount that is correlated with the tension of the knitting yarn 9, and outputs the physical amount to the control circuit 20 as an electrical signal. There are no particular limitations on the acquired physical amount, as long as it changes in correlation with change in the tension of the knitting yarn 9. The tension sensor 4 of this embodiment is configured by guide rollers 41 and 42 and a guide shaft portion 40 that is arranged at a position between the guide rollers 41 and 42. The guide shaft portion 40 is a roller-like member that comes into contact with the knitting yarn 9 and acquires a physical amount that corresponds to stress applied by the knitting yarn 9.

The physical amount acquired by the tension sensor 4 is input to the control circuit 20 as an electrical signal. The control circuit 20 includes a tension control portion that estimates the tension of the knitting yarn 9 based on the physical amount, and controls the tension adjusting apparatus 5 such that the tension of the knitting yarn 9 approaches a set tension. The set tension may be transmitted to the YFs 2 using the optical wireless system. The tension adjusting apparatus 5 of this embodiment adjusts the tension of the knitting yarn 9 by acting on a portion of the knitting yarn 9 that spans between the introduction guide 21 and the tension sensor 4. In the case where the tension adjusting apparatus 5 is provided external to the YFs 2, information acquired by the tension sensor 4 may be transmitted by the optical wireless transceiver 6 as information regarding the tension of the knitting yarn 9.

## Claims

1. A flat knitting machine (1) including a needle bed (1B) having a plurality of knitting needles, a rail (1R) extending along a length direction of the needle bed (1B) , a plurality of yarn feeders (2) provided on the rail (1R), and a computer (10) that controls the flat knitting machine (1), the flat knitting machine (1) **characterized by**:
a main body side transmitter (1t) that is provided in a vicinity of one end of the rail (1R) and transmits knitting-related information from the computer (10) in a direction along the rail (1R) through optical wireless transmission;
a main body side receiver (1r) that is provided in a vicinity of an other end of the rail (1R), receives the information transmitted through optical wireless transmission, and sends the information to the computer (10); and
an optical wireless transceiver (6) that is provided on each of the yarn feeders (2), receives the information transmitted from the main body side transmitter (1t), and relays the information to the main body side receiver (1r).

2. The flat knitting machine (1) according to claim 1,
wherein the optical wireless transceivers 6 each include
a YF side receiver (6r) that is provided on the yarn feeder (2A) at a position on one end side of the rail (1R) and has a light reception axis that is directed toward the one end side, and
a YF side transmitter (6t) that is provided on the yarn feeder (2A) at a position on an other end side of the rail (1R) and has a light projection axis that is directed toward the other end side.

3. The flat knitting machine (1) according to claim 1 or 2, further comprising:
a first feeder group made up of a plurality of the yarn feeders (2C, 2D) that travel on a same track; and
a second feeder group made up of a plurality of the yarn feeders (2E, 2F) that travel on another track that is adjacent to the track on which the first feeder group travels,
wherein a communication direction with respect to the first feeder group and a communication direction with respect to the second feeder group are opposite directions.

4. The flat knitting machine (1) according to any one of claims 1 to 3,
wherein the yarn feeders (2) each include at least one electrical device (4, 7) that acquires knitting-related information in addition to the optical wireless transceiver (6), and
the information acquired by the at least one electrical device (4, 7) is transmitted to the computer (10) through optical wireless communication.

## Patentansprüche

1. Flachstrickmaschine (1), die ein Nadelbett (1B) mit einer Vielzahl von Stricknadeln, eine Schiene (1R), die sich entlang einer Längsrichtung des Nadelbetts (1B) erstreckt, eine Vielzahl von Fadenführern (2), die an der Schiene (1R) vorgesehen sind, und einen Computer (10), der die Flachstrickmaschine (1) steuert, umfasst, wobei die Flachstrickmaschine (1) **gekennzeichnet ist durch**:
einen hauptkörperseitigen Sender (1t), der in Nachbarschaft zu einem Ende der Schiene (1R) vorgesehen ist und auf das Stricken bezogene Informationen von dem Computer (10) in einer Richtung entlang der Schiene (1R) **durch** eine optische, drahtlose Übertragung sendet,
einen hauptkörperseitigen Empfänger (1r), der in Nachbarschaft zu einem anderen Ende der Schiene (1R) vorgesehen ist, die **durch** die optische, drahtlose Übertragung gesendeten Informationen empfängt und die Informationen an den Computer (10) sendet, und
optische, drahtlose Sendeempfänger (6), die jeweils an jedem der Fadenführer (2) vorgesehen sind, die von dem hauptkörperseitigen Sender (1t) gesendeten Informationen empfangen und die Informationen zu dem hauptkörperseitigen Empfänger (1r) weiterleiten.

2. Flachstrickmaschine (1) nach Anspruch 1, wobei die optischen, drahtlosen Sendeempfänger 6 jeweils umfassen:
einen YF-seitigen Empfänger (6r), der an dem Fadenführer (2A) an einer Position auf einer Endseite der Schiene (1R) vorgesehen ist und eine Lichtempfangsachse, die zu der einen Endseite gerichtet ist, aufweist, und
einen YF-seitigen Sender (6t), der an dem Fadenführer (2A) an einer Position auf einer anderen Endseite der Schiene (1R) vorgesehen ist und eine Lichtprojektionsachse, die zu der anderen Endseite gerichtet ist, aufweist.

3. Flachstrickmaschine (1) nach Anspruch 1 oder 2, die weiterhin aufweist:
eine erste Führergruppe, die aus einer Vielzahl von Fadenführern (2C, 2D) besteht, die sich auf der gleichen Schiene bewegen, und
eine zweite Führergruppe, die aus einer Vielzahl von Fadenführern (2E, 2F) bestehen, die sich auf einer anderen Schiene bewegen, die der Schiene, auf der sich die erste Führergruppe bewegt, benachbart ist,
wobei eine Kommunikationsrichtung in Bezug auf die erste Führergruppe und eine Kommunikationsrichtung in Bezug auf die zweite Führergruppe einander entgegengesetzte Richtungen sind.

4. Flachstrickmaschine (1) nach einem der Ansprüche 1 bis 3, wobei:
die Fadenführer (2) jeweils wenigstens eine elektrische Einrichtung (4, 7), die auf das Stricken bezogene Informationen erhält, zusätzlich zu dem optischen, drahtlosen Sendeempfänger (6) enthalten, und
die durch die wenigstens eine elektrische Einrichtung (4, 7) erhaltenen Informationen an den Computer (10) über eine optische, drahtlose Kommunikation gesendet werden.

## Revendications

1. Machine à tricoter à plat (1) comportant un lit d'aiguilles (1B) ayant une pluralité d'aiguilles à tricoter, un rail (1R) s'étendant le long d'une direction longitudinale de la litière d'aiguilles (1B), une pluralité de dispositifs d'alimentation en fil (2) prévus sur le rail (1R), et un ordinateur (10) qui commande la machine à tricoter à plat (1), la machine à tricoter à plat (1) étant **caractérisée par** :
un émetteur côté corps principal (1t) qui est prévu à proximité d'une extrémité du rail (1R) et qui transmet des informations relatives au tricot à partir de l'ordinateur (10) dans une direction le long du rail (1R) au moyen d'une transmission optique sans fil ;
un récepteur côté corps principal (1r) qui est prévu à proximité d'une autre extrémité du rail (1R), qui reçoit les informations transmises au moyen de la transmission optique sans fil, et qui envoie les informations à l'ordinateur (10) ; et
un émetteur-récepteur optique sans fil (6) qui est prévu sur chacun des dispositifs d'alimentation en fil (2), qui reçoit les informations transmises par l'émetteur côté corps principal (1t), et qui relaie les informations au récepteur côté corps principal (1r).

2. Machine à tricoter à plat (1) selon la revendication 1,
dans laquelle les émetteurs-récepteurs optiques sans fil 6 comportent chacun
un récepteur côté dispositif d'alimentation en fil YF (6r) qui est prévu sur le dispositif d'alimentation en fil (2A) au niveau d'une position sur un côté d'extrémité du rail (1R) et qui a un axe de réception de lumière qui est dirigé vers un côté d'extrémité, et
un émetteur côté YF (6t) qui est prévu sur le dispositif d'alimentation en fil (2A) au niveau d'une position sur un autre côté d'extrémité du rail (1R) et qui a un axe de projection de lumière qui est dirigé vers l'autre côté d'extrémité.

3. Machine à tricoter à plat (1) selon la revendication 1 ou 2, comprenant en outre :
un premier groupe de dispositifs d'alimentation constitué d'une pluralité de dispositifs d'alimentation en fil (2C, 2D) qui se déplacent sur une même piste ; et
un deuxième groupe de dispositifs d'alimentation constitué d'une pluralité de dispositifs d'alimentation en fil (2E, 2F) qui se déplacent sur une autre piste qui est adjacente à la piste sur laquelle se déplace le premier groupe de dispositifs d'alimentation,
dans laquelle une direction de communication par rapport au premier groupe de dispositifs d'alimentation et une direction de communication par rapport au deuxième groupe de dispositifs d'alimentation sont des directions opposées.

4. Machine à tricoter à plat (1) selon l'une quelconque des revendications 1 à 3,
dans laquelle les dispositifs d'alimentation en fil (2) comportent chacun au moins un dispositif électrique (4, 7) qui acquiert des informations relatives au tricot en plus de l'émetteur-récepteur optique sans fil (6), et
les informations acquises par ledit au moins un dispositif électrique (4, 7) sont transmises à l'ordinateur (10) au moyen d'une communication optique sans fil.
